# EUROPEAN PATENT APPLICATION

(11) **EP 2 124 503 A1**
(43) Date of publication of application: **25.11.2009**
(21) Application number: 08784115.1
(22) Date of filing: 25.08.2008
(51) Int. Cl.: H04W 84/00, G06Q 30/00

(54) **METHOD, SYSTEM, TERMINAL AND SERVER FOR REALIZING THE SERVICE BASED ON MULTIMEDIA MESSAGE SERVICE**

(30) Priority: 24.08.2007 CN 200710147918
(71) Applicant: Huawei Technologies Co., Ltd., Longgang District, Shenzhen Guangdong 518129 (CN)
(72) Inventor: YANG, Jian, Longgang District 518129, Shenzhen, P.R. (CN); WANG, Lei, Longgang District 518129, Shenzhen, P.R. (CN); CHEN, Guoqiao, Longgang District 518129, Shenzhen, P.R. (CN)
(74) Representative: Kreuz, Georg Maria
(86) International application number: PCT/CN2008/072125
(87) International publication number: WO 2009/026847

(57) **Abstract**

A method, system, terminal, and server for implementing services based on Multimedia Message Service (MMS) are disclosed. The method includes these steps: The terminal obtains information about orderable commodities, and receives an order of a user; the terminal generates an order result according to order information and the order of the user; and the terminal sends the order result to a server in a predefined format, and notifies the server to perform corresponding operations. Through the present invention, the recipient obtains the commodities ordered by the terminal of the sender.

## Description

This application claims priority to Chinese Patent Application No. 200710147918.9, filed with the Chinese Patent Office on August 24, 2007 and entitled "Method, System, Terminal, and Server for Implementing Services Based on MMS", which is incorporated herein by reference in its entirety.

### Field of the Invention

The present invention relates to the Multimedia Message Service (MMS) in the mobile communication, and in particular, to a method, system, terminal, and server for implementing services based on MMS.

### Background of the Invention

The MMS can implement delivery or exchange of messages such as multimedia contents between different terminals, or between a terminal and an Application Server (AS) or a content server. The multimedia contents refer to not only the text contents in the Short Message Service (SMS), but also the multimedia contents such as pictures, videos, audios, and animated cartoons. On this basis, the MMS-based services are diversified, for example, picture news, movie and television propagandizing, advertisements, maps, and weather reports.

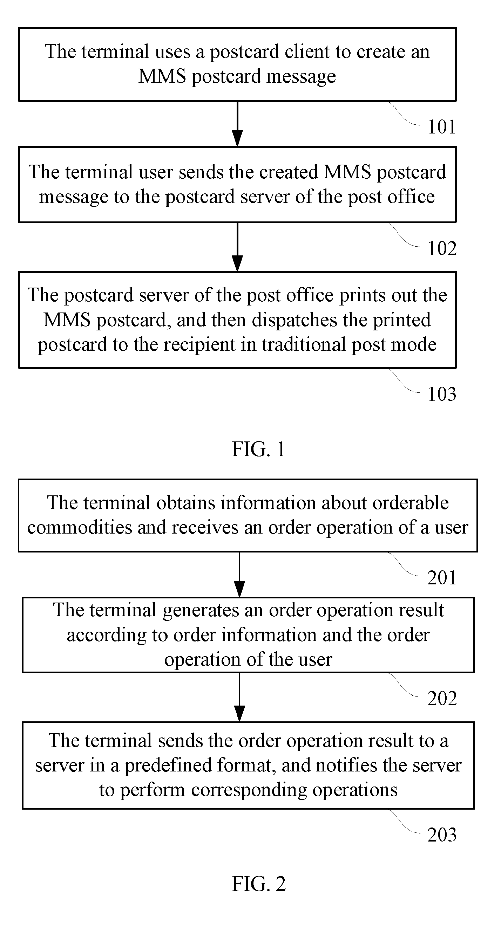

With the development of the MMS, a postcard service is introduced into the MMS. The postcard service sends physical postcards through the MMS. FIG. 1 shows a service process of sending a postcard through MMS in the prior art. The process includes:
Block 101: The terminal user on the sender side uses a postcard client to create an MMS postcard message. In fact, the MMS postcard message is an MMS message that meets certain requirements. For example, the MMS postcard message may include a greeting part and a recipient information part. The recipient information may include the recipient name, mail address, and postcode.
Block 102: The terminal user sends the created MMS postcard message to the postcard server of the post office.
Block 103: The post office prints out the MMS postcard on the postcard server of the post office, and then dispatches the printed postcard to the recipient in traditional post mode.

In this way, the sender sends a physical postcard to the recipient through the MMS postcard service.

With the development of technologies and the increase of people's requirements, an ordering service is expected, but technologies in the prior art provide no more service than sending physical postcards.

### Summary of the Invention

According to aspects of the present invention, a method, system, terminal, and server are proposed for implementing services based on MMS to enable ordering of commodities.

The method, system, terminal, and server for implementing services based on MMS herein are implemented through the following technical solution:

A method for implementing services based on MMS includes:by a terminal, obtaining information about orderable commodities, and receiving an order of a user; generating an order result according to order information and the order of the user; and sending the order result to a server in a predefined format, and notifying the server to perform corresponding operations.

A method for implementing services based on MMS includes:by a server, providing information about orderable commodities to a terminal; receiving an result of ordering a service from the terminal; and resolving order information of a user in a predefined format, and providing a corresponding service.

A system for implementing services based on MMS includes:a terminal, adapted to: obtain information about orderable commodities, receive an order of a user and generate an order result, and send the order result in a predefined format; and a server, adapted to: resolve order information of the user in the predefined format, and provide a corresponding service.

A terminal for implementing services based on MMS includes:an orderable commodity information obtaining module, adapted to obtain information about orderable commodities; an order information processing module, adapted to receive an order of a user; and an order information sending module, adapted to send an order result to a server in a predefined format.

A server for implementing services based on MMS includes:an orderable commodity information sending module, adapted to send information about orderable commodities; and an order information processing module, adapted to: resolve order information of a user in a predefined format, and provide a corresponding service.

A system for implementing services based on MMS includes:
a first server, adapted to: provide information about orderable commodities, resolve an order result from a terminal user in a predefined format, and find a second server closest to the destination according to the resolved order result; and the second server, adapted to: receive the order result from the first server, and distribute an ordered commodity.

It can be seen from the technical solution under the present invention that, the terminal obtains the information about orderable commodities, receives the order of the user, and sends the order result of the user to the server in the predefined format; and the server resolves the order information of the user in the predefined format and provides the corresponding service. In this way, the recipient obtains the commodity ordered by the terminal on the sender side. A mode in which the terminal demonstrates the information about orderable commodities to the user is provided so that the user can operate accordingly.

### Brief Description of the Drawings

FIG. 1 is a flowchart of a service for sending a postcard through MMS in the prior art;
FIG. 2 is a flowchart of a method according to an embodiment of the present invention;
FIG. 3 is a flowchart defined in an MMS message template delivered by a server to a terminal according to a method embodiment of the present invention;
FIG. 4 shows a format of an MMS message;
FIG. 5 is a flowchart of finding a closest server through redirection according to a method embodiment of the present invention;
FIG. 6 is a flowchart of a complete method embodiment of the present invention;
FIG. 7 is a block diagram of a system embodiment of the present invention;
FIG. 8 is a block diagram of a terminal embodiment of the present invention;
FIG. 9 is a block diagram of a server embodiment of the present invention; and
FIG. 10 is a block diagram of another system embodiment of the present invention.

### Detailed Description of Embodiments

The present invention provides, according to one aspect, a method for implementing services based on MMS. The terminal obtains information about orderable commodities, receives the order of the user, and sends the order result of the user to the server in the predefined format; and the server resolves the order information of the user in the predefined format and provides the corresponding service.

To facilitate the understanding of aspects of the technical solution under the present invention, in the following, embodiments of the present invention are described in detail with reference to the accompanying drawings.

FIG. 2 is a flowchart of a method according to an embodiment of the present invention. As shown in FIG. 2, the method includes:
Block 201: The terminal obtains information about orderable commodities, and receives the order of the user.

The terminal may obtain information about orderable commodities in many modes.

Mode 1: The server sends an MMS message to the corresponding user group. The message carries an introduction to orderable commodities, namely, information about orderable commodities, including an introduction to pictures, videos, audios, and texts. In this way, the terminal may obtain the information about orderable commodities through the received MMS message.

For example, the MMS message sent by the server to the corresponding user group includes at least one slide. Each slide includes two areas. One area displays images (including pictures and videos), and the other area displays texts. Each slide introduces a moon cake. The introduction includes: a picture, text description, and price information. That is, each slide presents an image of a moon cake (corresponding to a picture file or a video clip file, which is hereinafter regarded as a picture file for ease of description), text description, and price (corresponding to a text file) information.

In this solution, an order identifier may be used as a filename of a file (such as a picture file or a text file) included in each slide, for example, mooncake001.jpg, and mooncake001.txt. In this way, the filename of each object has another function, namely, acting as an order identifier. Therefore, a slide of the MMS message includes at least one file, whose filename is the order identifier.

Specially, when the server delivers information about orderable commodities, the information about each commodity may be sent through an MMS message. In this case, the Subject part of the MMS message header carries the information about orderable commodities, for example, mooncake001. Accordingly, the terminal may respond to the MMS message, with the order information being carried in the Subject.

Mode 2: The terminal receives the MMS message template delivered by the server, and uses the MMS message template to guide the user in creating order information.

To make it easier to use a new service launched on the network, a template is introduced. The MMS generally uses a Synchronized Multimedia Integration Language (SMIL) configuration file to describe the MMS message received and sent from the terminal. If the multimedia capabilities of the terminal are great, the SMIL configuration file may be used to express MMS messages of richer contents. However, it may be rather complicated to integrate richer contents through an SMIL. To control the complexity, a template is used to reduce visibility in applying richer contents. A template is a structure that treats an SMIL configuration file as an interface and is capable of invoking cameras, recorders, text editors, address books, and so on. The terminal user may put different contents into one MMS message in a simple way according to the template structure. The template makes the MMS interoperable. For example, the server may create an MMS message template and send it to the terminal user. The terminal user may edit the contents of the MMS message template and return the MMS message to the server.

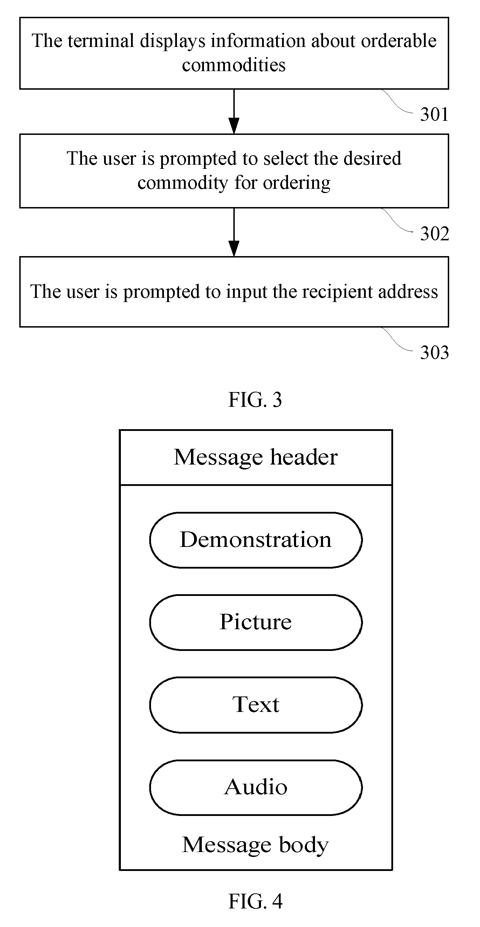

The server delivers an MMS message template to the terminal. The template defines a process. As shown in FIG. 3, the process includes:
Block 301: The terminal displays information about orderable commodities.

The terminal displays the multimedia information about the orderable commodities included in the MMS message template, for example, an introduction to pictures, videos, audios, and texts.

Block 302: The user is prompted to select a desired commodity for ordering.

The MMS message template may prompt the user to take photos and input greetings.

Block 303: The user is prompted to input the recipient's address.

The included process may be expressed by an MTD file. An example of MTD files is given below:

```
   <?xml version="1.0" encoding="UTF-8"?>
   <!DOCTYPE mmstemplate PUBLIC "-//OMA//DTD MTD 1.3//EN"
   "http://www.openmobilealliance.org/MMS/MTD/1.3/DTD/mtd13.dtd">
   <mmstemplate xmlns="http://www.openmobilealliance.org/2004/mtd">
   <head>
   <title>Real gift Postcard Example</title>
   <description>MTD sample code for Postcard service</description>
   <date>2004-10-12</date>
   <version> 1.02</version>
   <author> UEDA</author>
   </head>
   <body>
   <message>
   <to-header editable="false">18175551212</to-header>
   <subject-header>POSTCARD</subject-header>
   </message>
   <wizard>
   <step guide= app="info-view"/>
   <step guide="Please select the commodity to be ordered" app="order-info-input"
 target-name="order-info.txt"
   target-type="text/plain" required="true"/>
   <step guide="Please input the recipient's address" app="text-input"
 target-name="address.txt"
   target-type="text/plain" required="true"/>
   <step guide="Please take photos" app="still-camera" param="resolution=1024x768"
 targetname="
   image.jpg" target-type="image/jpeg"/>
   <step guide="Please input greetings" app="rich-text-input"
 target-name="message.html" targettype="
   text/html"/>
   </wizard>
   </body>
   </mmstemplate>
```

In the foregoing codes, "step guide" indicates an prompt; "app" indicates an application module; "info-view" enables the user to view information; "order-info-input" enables the user to select or input order information; "text-input" enables the user to input the recipient's address; "still-camera" enables the user to invoke the photographing function; and "rich-text-input" enables the user to input an HTML text.

The terminal prompts the user to complete the corresponding contents step by step according to the instructions in the MTD file, thus completing the process of ordering and creating a postcard.

For example, through this statement: <step guide="Please select the commodity to be ordered" app="order-info-input" target-name="order-info.txt", the terminal prompts the user to select the commodity to be ordered. Afterward, the user selects or inputs the order information, and stores the order information into the target file named "order-info.txt".

For another example, through this statement: <step guide="Please take photos" app = "still-camera" param="resolution=1024x768" targetname="image.jpg" target-type="image/jpeg"/>, the terminal prompts the user to take photos. Afterward, the user invokes the photographing function, sets the resolution to 1024*768, and stores the setting into a target JPEG file named "image.jpg".

The terminal may also obtain the information about orderable commodities through a Wireless Application Protocol (WAP) or the Internet. For example, the terminal initiates a "Hyper Text Transfer Protocol (HTTP) or Wireless Session Protocol (WSP) get" to access the corresponding page of the service provider. The provided page displays the information about orderable commodities. In this way, the user may select the content for ordering on the web page, and submit the order.

Mode 3: The terminal obtains information about orderable commodities through a SIM Tool Kit (STK).

The client identity module of the terminal may preset the corresponding interactive menu item or obtain the menu item through Over The Air (OTA) update. The terminal allows the user to obtain the information about orderable commodities or to complete ordering through interaction. The client identity module of the terminal may be: a Subscriber Identity Module (SIM) in a Global System for Mobile Communications (GSM), a User Service Identity Module (USIM) in a third Generation (3G) mobile telecommunications system, a User Identity Module (UIM) in a Code Division Multiple Access (CDMA) system, or an IMS Service Identity Module (ISIM) in an IP Multimedia Subsystem (IMS), or a relevant application on the terminal in the case of terminal-card integration.

The information about orderable commodities may be obtained in other ways, for example, broadcast/multicast or Cell Broadcast Service (CBS) monitoring (a special channel for delivering information about orderable commodities is set on the network), 2-dimensional codes (2-dimensional codes are printed under the posters so that the terminal supporting this function can photograph the input information), Dynamic Content Delivery (DCD), Push mode, HTTP, Instant Messaging (IM) mode, Session Initiation Protocol (SIP) application, or email mode. Moreover, a timer may be set on the server, and the information about orderable commodities is delivered to the terminal through a Synchronization Mark-up Language (SyncML) protocol when the timer times out.

In the foregoing modes, BCAST is a concept put forward by the Open Mobile Alliance (OMA) with respect to the mobile broadband digital broadcast/multicast service. The broadcast/multicast includes the traditional one-to-many broadcast mode and the multicast mode. The CBS is a mobile value-added service for providing individualized information services. Through the CBS, the mobile operator may send a specified brief text to the cells covered by one or more base stations in a mobile network. All the mobile users in the cells can receive the information through mobile terminals. The DCD updates the customized contents into the terminal of a user through periodical download or push to enhance the user experience in browsing information. The SyncML synchronization protocol defines the data flow in the session process of the data synchronization operation, handshake process between both parties, and type of data synchronization operation. The SyncML indication protocol mainly refers to the data types and command formats supported for synchronization, and the SyncML message formats that can be transmitted in various networks. The SyncML messages can be transmitted on any wired or wireless network connection.

It should be noted that the user may order more than one commodity, and the order result includes the name and quantity of at least one ordered commodity.

Block 202: The terminal generates an order result according to the order information and order of the user.

Block 203: The terminal sends the order result to the server in a predefined format, notifying the server to perform corresponding operations.

FIG. 4 shows a predefined format of an MMS message. As shown in FIG. 4, the MMS message includes two parts: message header, and message body. The message body includes four parts: demonstration, picture, text, and audio. The order result of the user in the foregoing step may be carried in the message header or message body of an MMS message.

If the order result is carried in the message header, a new header field may be added, or the existing header field may be extended. The terminal may add the order result of the user to the new header field or extended header field in the message header of the MMS message.

The new header field may be added in this way:
X-Mms-PurchaseService Field
PurchaseService value=Text-string

For example, "mooncake001+2" may be input into Text-string, indicating purchase of two moon cakes numbered 001.

As required, the X-Mms-PurchaseService field may appear repeatedly so that the user can order multiple types of commodities through one MMS message.

After the terminal generates an MMS message that carries the commodity order information, the terminal sends the message to the server of the service provider, and the server identifies the commodity order information according to the header field.

The existing header field may be extended to carry the corresponding value. For example, the existing X-Mms-Message-Class field is extended:
Message-class-value = Class-identifier | Token-text
Token-text="postbuy+mooncake001+2"

A new category identifier "Token-text" is added to indicate the order information. For example, the order information in the foregoing content indicates purchase of two moon cakes numbered 001.

The order information of the user may also be carried in the message body. In this case, the order information may be carried in a part (such as the demonstration part, text part, picture text, or audio part) of the existing message body, or may exist as a new separate part in the message body.

An example of adding the order information to a part, e.g. the text part of the existing message body in a predefined format is given below:

```
        <order-description> =
               <goods-description > =
                     Name= mooncake001
                     Number=2
               <goods-description> =
                     Name= mooncake002
                  Number=1
   If the format is XML, the Document Type Definition (DTD) is as follows:
        order-info.dtd
        <?xml version="1.0" encoding="UTF-8"?>
        <!ELEMENT order-description (goods-description*)>
        <!ELEMENT goods-description (#PCDATA)>
        <!ATTLIST goods-description
           Name CDATA #REQUIRED
           Number CDATA #REQUIRED
        >
   The corresponding schema is as follows:
        <?xml version="1.0" encoding="UTF-8"?>
        <xs:schema xmlns:xs="http://www.w3.org/2001/XMLSchema"
   elementFormDefault="qualified">
           <xs:element name=" goods-description">
               <xs:complexType>
                   <xs:simpleContent>
                       <xs:extension base="xs:string">
                           <xs:attribute name="Name" type="xs:string"
   use="required"/>
                           <xs:attribute name="Number" type="xs:string"
   use="required"/>
                       </xs:extension>
                   </xs: simp leContent>
               </xs:complexType>
           </xs:element>
           <xs:element name="order-description">
               <xs:complexType>
                   <xs:sequence>
                       <xs:element ref="goods-description" minOccurs="0"
   maxOccurs="unbounded"/>
                   </xs:sequence>
               </xs:complexType>
           </xs:element>
        </xs:schema>
```

An XML instance generated according to the order-info.dtd syntax format is as follows:

```
        <?xml version="1.0" encoding="UTF-8"?>
        <!DOCTYPE order-description SYSTEM "C:\Documents and
   Settings\Administrator\My Documents\order-info.dtd">
        <order-description>
           <goods-description Name="mooncake001" Number="2"/>
           <goods-description Name="mooncake002" Number="1"/>
        </order-description>
```

An XML instance generated according to the order-info.xsd syntax format is as follows:

```
        <?xml version="1.0" encoding="UTF-8"?>
        <order-description xmlns:xsi="http://www.w3.org/2001/XMLSchema-instance"
   xsi:noNamespaceSchemaLocation="C:\Documents and Settings\Administrator\My
   Documents\order-info.xsd">
           <goods-description Name="mooncake001" Number="2"/>
           <goods-description Name="mooncake002" Number="1"/>
        </order-description>
```

The order information may be added as a new part to the message body. For example:

```
        Date: Wed, 07 Jun 2006 17:54:49 +0800
        From: +8613910916446@mmsc-bj-rsv.monternet.com
        Subject: =5oGt6LS65Lit56eL
        To: jian.yang@huawei.com
        Content-type: Multipart/Related;
         boundary="-----Boundary-00=_D7IHO49D7TH000000000";
        X-Mms-Message-ID: 060717544991000009318
        X-Mms-Message-Class: Personal
        X-Mms-Priority: Normal
        -----Boundary-00=_D7IHO49D7TH000000000
        Content-Type: text/plain;
          charset="utf_8"
        Content-Transfer-Encoding: Base64
        Content-Location: 8712df01.asc
        5Lit56eL5L2z6IqC5b+r5LmQ77yB (Base64 codes of "Happy Mid Autumn
   Day")
        -----Boundary-00=_D7IHO49D7TH000000000
        Content-Type: text/plain;
          charset="utf-8"
        Content-Transfer-Encoding: Base64
        Content-Location: order-info.asc
        bW9vbmNha2UwMDErMg0KbW9vbmNha2UwMDIrMQ0K (Base 64 codes of
   "mooncake001+2 mooncake002+1")
        -----Boundary-00=_D71HO49D7TH000000000-
```

The foregoing examples of different codes show that the order information of the user may be carried in the message body in different predefined formats.

Afterward, the server resolves the order information of the user in the predefined format, and provides the corresponding service.

The server resolves the message header or message body of the MMS message according to the predefined format to obtain the order information of the user, and distributes the ordered commodities. If the MMS message includes a postcard, the server needs to print and distribute the postcard.

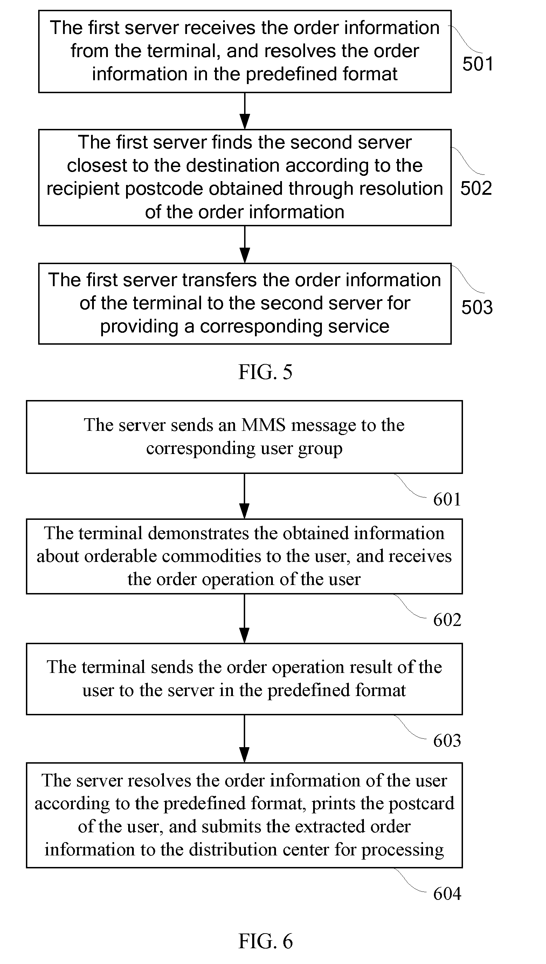

In the foregoing operations, a closest server may be selected according to the content in the recipient's information. For example, the closest server is found according to the postcode of the recipient. Specifically, the redirection mode may be applied. As shown in FIG. 5, the redirection mode includes:

Block 501: The first server receives the order information from the terminal, and resolves the order information in the predefined format.

Block 502: The first server finds the second server closest to the destination according to the recipient postcode obtained through resolution of the order information.

Block 503: The first server transfers the order information of the user to the second server, which will provide a corresponding service.

In this way, the ordered commodities (which may include a postcard) are sent from the server closest to the destination, and this saves the cost.

From the perspective of the server, the method for implementing services based on MMS may include the following steps:
A. The server provides information about orderable commodities for a terminal.
B. The server receives from the terminal a result of ordering a service.
C. The server resolves the order information of the user in a predefined format, and provides the corresponding service.

Step A may be implemented in three modes:
Mode 1: When the server delivers information about orderable commodities, the server sends each piece of commodity information through one MMS message. The commodity information is carried in the Subject part of the message header of the MMS message.
Mode 2: The server sends an MMS message template to the terminal. The template is for guiding the user in creating an order message.
Mode 3: The server provides the corresponding interactive menu items for the terminal through presetting or in OTA mode, and obtains the order information through interaction.

The specific implementation process of the foregoing three modes is similar to that described herein earlier.

Step C may be implemented by the first server and the second server. Step C includes:
C1. The first server receives the order information and the order result from the user, and resolves such information in the predefined format.
C2. The first server finds the second server closest to the destination according to the recipient postcode obtained through resolution of the order information.
C3. The first server transfers the order information of the user to the second server, which will provide a corresponding service.

A complete embodiment of the method is described below. FIG. 6 shows the process of the complete embodiment.

Block 601: The server sends an MMS message to the corresponding user group.

The MMS message includes multiple texts and pictures. Each picture demonstrates a moon cake, and is accompanied by a text for describing the moon cake. An order identifier is used as the filename of the picture file and text file included in each slide.

Block 602: The terminal demonstrates the obtained information to the user, and receives the order of the user.

The user presses an Order key on the keypad of the terminal or selects the Order menu to order the commodity. Specifically, when the user views the MMS message, if the user wants to purchase the moon cake demonstrated on a slide, the user presses the Order key, and the terminal reads the filename (namely, the order identifier) of the file corresponding to the slide and prompts the user to input the quantity of moon cakes to be ordered.

Afterward, the user invokes the postcard client, inputs the destination address of the server, and sets the name of the text attachment to "service identifier + order identifier + ordered quantity", for example, "postbuy + mooncake001+2", which means purchase of two moon cakes numbered 001. The service identifier distinguishes the service from the ordinary postcard service. If the ordinary postcard service is not provided on this server, the service identifier is not required.

The user affixes his photo and inputs the greetings and the communication address of the recipient to generate a message that carries the order information.

Further, in this block, the user fills the postcard.

Block 603: The terminal sends the order result of the user to the server in the predefined format.

For example, the order result of the user is carried in the message header of the MMS message in the format of an added header field.
X-Mms-PurchaseService Field
PurchaseService value = mooncake001+2

The extended message header additionally carries the information indicating purchase of two moon cakes numbered 001. The format of the extended message header may be one of the code formats mentioned above. Afterward, the MMS message is sent to the server.

Further, in this step, the postcard completed by the user is sent to the server.

Block 604: The server resolves the order information of the user according to the predefined format, prints the postcard of the user (including the photo of the user, greetings, and recipient's information), and submits the extracted order information to the distribution center for processing.

In this way, the server sends the postcard and the ordered commodities to the recipient.

As shown in the foregoing embodiment of the present invention, the terminal obtains the information about orderable commodities, receives the order of the user, and sends the order result of the user to the server in the predefined format; and the server resolves the order information of the user in the predefined format and provides the corresponding service. In this way, the recipient obtains the commodity ordered by the terminal on the sender side. Moreover, the foregoing embodiment gives a mode in which the terminal demonstrates the information about orderable commodities to the user so that the user can operate accordingly.

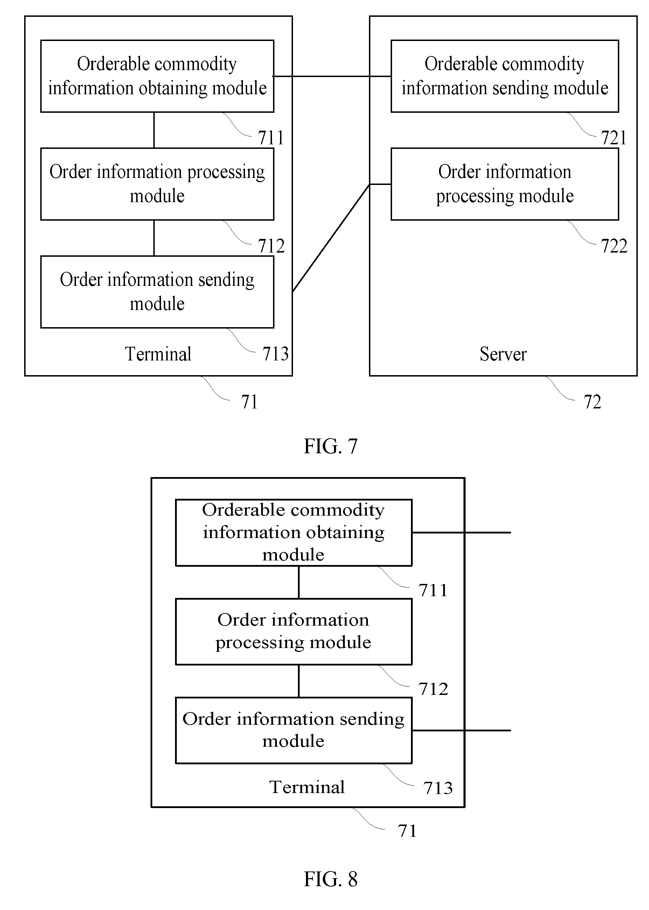

A system embodiment of the present invention is described below. FIG. 7 is a block diagram of the system embodiment. As shown in FIG. 7, the system includes a terminal 71 and a server 72.

The terminal 71 is adapted to obtain information about orderable commodities, receive the order of the user and generate an order result, and send the order result in a predefined format.

The server 72 is adapted to resolve order information of the user in the predefined format, and provide a corresponding service.

The terminal includes an orderable commodity information obtaining module 711, an order information processing module 712, and an order information sending module 713.

The orderable commodity information obtaining module 711 is adapted to obtain information about orderable commodities.

The order information processing module 712 is adapted to receive an order of a user.

The order information sending module 713 is adapted to send an order result to a server 72 in a predefined format.

The server includes an orderable commodity information sending module 721 and an order information processing module 722.

The orderable commodity information sending module 721 is adapted to send information about orderable commodities.

The order information processing module 722 is adapted to resolve order information of the user in the predefined format, and provide a corresponding service.

The orderable commodity information obtaining module 711 obtains the information about orderable commodities in any of the following modes; and the orderable commodity information sending module 721 sends the information about orderable commodities in any of the following modes:
pre-storing in the terminal; MMS; MMS message template delivered by the network; Push mode; DCD; WAP/web browse; STK; broadcast/multicast or CBS monitoring; 2-dimensional codes; HTTP; IM mode; SIP application; email mode; or, a timer is set on the server, and the information about orderable commodities is delivered to the terminal through a SyncML protocol when the timer times out.

When sending the information about orderable commodities through an MMS message, the orderable commodity information sending module 721 uses an order identifier as the filename of the file included in each slide in the MMS message.

A terminal embodiment of the present invention is described below. FIG. 8 is a block diagram of the terminal embodiment. As shown in FIG. 8, the terminal includes an orderable commodity information obtaining module 711, an order information processing module 712, and an order information sending module 713.

The orderable commodity information obtaining module 711 is adapted to obtain information about orderable commodities.

The order information processing module 712 is adapted to receive an order of a user.

The order information sending module 713 is adapted to send an order result to a server in a predefined format.

The orderable commodity information obtaining module 711 obtains the information about orderable commodities in any of the following modes:
pre-storing in the terminal; MMS; MMS message template delivered by the network; Push mode; DCD; WAP/web browse; STK; broadcast/multicast or CBS monitoring; 2-dimensional codes; HTTP; IM mode; SIP application; email mode; or, a timer is set on the server, and the information about orderable commodities is delivered to the terminal through a SyncML protocol when the timer times out.

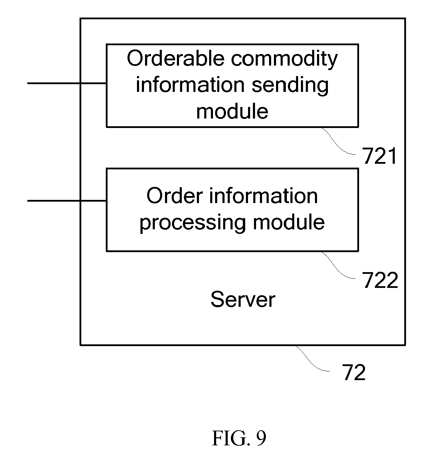

A server embodiment of the present invention is described below. FIG. 9 is a block diagram of the server. As shown in FIG. 9, the server includes an orderable commodity information sending module 721 and an order information processing module 722.

The orderable commodity information sending module 721 is adapted to send the information about orderable commodities.

The order information processing module 722 is adapted to resolve order information of the user in the predefined format, and provide a corresponding service.

The orderable commodity information sending module 721 sends the information about orderable commodities in any of the following modes:
pre-storing in the terminal; MMS; MMS message template delivered by the network; Push mode; DCD; WAP/web browse; STK; broadcast/multicast or CBS monitoring; 2-dimensional codes; HTTP; IM mode; SIP application; email mode; or, a timer is set on the server, and the information about orderable commodities is delivered to the terminal through a SyncML protocol when the timer times out.

When sending the information about orderable commodities through an MMS message, the orderable commodity information sending module 721 uses an order identifier as the filename of the file included in each slide in the MMS message.

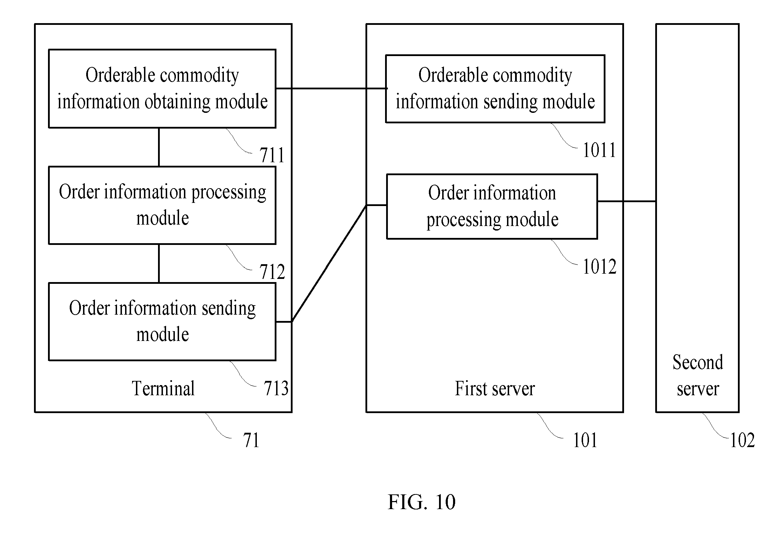

The system in another embodiment of the present invention is described below. FIG. 10 is a block diagram of this system embodiment. As shown in FIG. 10, the system includes a terminal 71, a first server 101, and a second server 102.

The first server 101 is adapted to provide information about orderable commodities, resolve an order result from a terminal user in a predefined format, and find the second server 102 closest to the destination according to the resolved order result.

Specifically, the first server may find the second server closest to the destination according to the recipient postcode obtained through resolution of the order result.

The second server 102 is adapted to receive the order information and the order result from the first server, and distribute the ordered commodity.

The first server 101 includes an orderable commodity information sending module 1011 and an order information processing module 1012.

The orderable commodity information sending module 1011 is adapted to send the information about orderable commodities.

The order information processing module 1012 is adapted to resolve order information of a user in a predefined format, and find the second server 102 closest to the destination according to the resolved order information.

The second server 102 is adapted to receive the order information from the first server, and distribute the ordered commodity.

The first server 101 sends the information about orderable commodities in any of the following modes:
pre-storing in the terminal; MMS; MMS message template delivered by the network; Push mode; DCD; WAP/web browse; STK; broadcast/multicast or CBS monitoring; 2-dimensional codes; HTTP; IM mode; SIP application; email mode; or, a timer is set on the server, and the information about orderable commodities is delivered to the terminal through a SyncML protocol when the timer times out.

When sending the information about orderable commodities through an MMS message, the orderable commodity information sending module 1011 uses an order identifier as the filename of the file included in each slide in the MMS message.

As shown in the foregoing embodiment of the present invention, the terminal obtains the information about orderable commodities, receives the order of the user, and sends the order result of the user to the server in the predefined format; and the server resolves the order information of the user in the predefined format and provides the corresponding service. In this way, the recipient obtains the commodity ordered by the terminal on the sender side. Moreover, the foregoing embodiment gives a mode in which the terminal demonstrates the information about orderable commodities to the user so that the user can operate accordingly.

Although the present invention has been described through several exemplary embodiments, the invention is not limited to such embodiments. It is apparent that those skilled in the art can make modifications and variations without departing from the scope of the invention. The invention is intended to cover the modifications and variations provided that they fall in the scope of protection defined by the following claims.

## Claims

1. A method for implementing services based on the Multimedia Message Service, (MMS), comprising:
obtaining, by a terminal, information about orderable commodities, and receiving an order of a user;
generating an order result according to order information and the order of the user; and
sending the order result to a server in a predefined format, and notifying the server to perform corresponding operations.

2. The method of claim 1, wherein the terminal obtains the information about orderable commodities in at least one of the following modes:
pre-storing in the terminal; MMS; an MMS message template delivered by a network; Push mode; Dynamic Content Delivery (DCD); Wireless Application Protocol (WAP)/web browse; Subscriber Identity Module Tool Kit (STK); broadcast/multicast or Cell Broadcast Service (CBS) monitoring; 2-dimensional codes; Hyper Text Transfer Protocol (HTTP); Instant Messaging (IM) mode; Session Initiation Protocol (SIP) application; email mode; or, a timer is set on the server, and the information about orderable commodities is delivered to the terminal through a Synchronization Mark-up Language (SyncML) protocol when the timer times out.

3. The method of claim 1, wherein the obtaining, by a terminal, the information about orderable commodities comprises:
receiving an MMS message from the server, wherein the MMS message carries the information about orderable commodities.

4. The method of claim 3, wherein:
a slide of the MMS message comprises at least one file, whose filename is an order identifier.

5. The method of claim 1, wherein the obtaining, by a terminal, the information about orderable commodities comprises:
receiving an MMS message template from the server, and using the MMS message template to guide the user in creating an order message.

6. The method of claim 5, wherein guiding the user in creating the order message comprises:
the terminal displays the information about orderable commodities; prompts the user to select the commodities to be ordered; and prompts the user to input a recipient's address.

7. The method of claim 1, wherein the obtaining, by a terminal, the information about orderable commodities comprises:
a client identity module of the terminal presets a corresponding interactive menu item, or obtains the corresponding interactive menu item in Over The Air (OTA) mode, and the user obtains the information about orderable commodities through interaction.

8. The method of claim 1, wherein the sending of the order result to the server in the predefined format comprises:
adding, by the terminal, the order result of the user to a message header or a message body of an MMS message, which is then sent to the server.

9. The method of claim 8, wherein the adding, by the terminal, the order result of the user to the message header of the MMS message comprises:
adding, by the terminal, the order result of the user to a new header field or an extended header field in the message header of the MMS message.

10. The method of claim 8, wherein the adding of the order result of the user to an extended header field of the MMS message comprises:
sending, by the server, information about each commodity through one MMS message when the server delivers the information about orderable commodities, wherein the commodity information is carried in a Subject part of the message header of the MMS message; and
adding, by the terminal, the order information to the Subject part of the message header of the MMS message accordingly.

11. The method of claim 8, wherein the adding, by the terminal, the order result of the user to the message body of the MMS message comprises:
adding, by the terminal, the order result of the user to a demonstration part, a text part, a picture part, or an audio part of the message body of the MMS message or to any combination thereof, or adds the order result of the user as a new separate part to the message body.

12. A method for implementing services based on Multimedia Message Service (MMS), comprising:
by a server, providing information about orderable commodities to a terminal;
receiving an result of ordering a service from the terminal; and
resolving order information of a user in a predefined format, and providing a corresponding service.

13. The method of claim 12, wherein the server that resolves the order information of the user and provides the corresponding service in the predefined format is a first server and a second server, and the method comprises:
by the first server, receiving an order result from the user, and resolving the order result in the predefined format;
finding the second server closest to a destination according to a recipient postcode obtained through resolution of the order result; and
transferring the order information of the user to the second server for providing the corresponding service.

14. The method of claim 13, wherein the providing of the information about orderable commodities to the terminal comprises:
by the server, sending information about each commodity through one MMS message when the server delivers the information about orderable commodities, wherein the commodity information is carried in a Subject part of a message header of the MMS message; or
sending an MMS message template to the terminal, wherein the template guides the user in creating an order message; or
providing a corresponding interactive menu item for the terminal through presetting or in the Over The Air (OTA) mode, and obtaining the order information through interaction.

15. A system for implementing services based on the Multimedia Message Service (MMS), comprising:
a terminal, adapted to obtain information about orderable commodities, receive an order of a user and generate an order result, and send the order result in a predefined format; and
a server, adapted to resolve order information of the user in the predefined format, and provide a corresponding service.

16. A terminal for implementing services based on the Multimedia Message Service (MMS), comprising:
an orderable commodity information obtaining module, adapted to obtain information about orderable commodities;
an order information processing module, adapted to receive an order of a user; and
an order information sending module, adapted to send an order result to a server in a predefined format.

17. The terminal of claim 16, wherein the orderable commodity information obtaining module obtains the information about orderable commodities in any of the following modes:
pre-storing in the terminal; MMS; an MMS message template delivered by a network; Push mode; Dynamic Content Delivery (DCD); Wireless Application Protocol (WAP)/web browse; Subscriber Identity Module Tool Kit (STK); broadcast/multicast or Cell Broadcast Service (CBS) monitoring; 2-dimensional codes; Hyper Text Transfer Protocol (HTTP); Instant Messaging (IM) mode; Session Initiation Protocol (SIP) application; email mode; or, a timer is set on the server, and the information about orderable commodities is delivered to the terminal through a Synchronization Mark-up Language (SyncML) protocol when the timer times out.

18. A server for implementing services based on Multimedia Message Service (MMS), comprising:
an orderable commodity information sending module, adapted to send information about orderable commodities; and
an order information processing module, adapted to resolve order information of a user in a predefined format, and provide a corresponding service.

19. The server of claim 18, wherein the orderable commodity information sending module sends the information about orderable commodities in any of the following modes:
pre-storing in the terminal; MMS; an MMS message template delivered by a network; Push mode; Dynamic Content Delivery (DCD); Wireless Application Protocol (WAP)/web browse; Subscriber Identity Module Tool Kit (STK); broadcast/multicast or Cell Broadcast Service (CBS) monitoring; 2-dimensional codes; Hyper Text Transfer Protocol (HTTP); Instant Messaging (IM) mode; Session Initiation Protocol (SIP) application; email mode; or, a timer is set on the server, and the information about orderable commodities is delivered to the terminal through a Synchronization Mark-up Language (SyncML) protocol when the timer times out.

20. The server of claim 18, wherein:
when sending the information about orderable commodities through an MMS message, the orderable commodity information sending module uses an order identifier as a filename of a file comprised in each slide in the MMS message.

21. A system for implementing services based on the Multimedia Message Service (MMS), comprising:
a first server, adapted to provide information about orderable commodities, resolve an order result from a terminal user in a predefined format, and find a second server closest to a destination according to the resolved order result; and
a second server, adapted to receive the order result from the first server, and distribute ordered commodities.

22. The system of claim 21, wherein the first server sends the information about orderable commodities in any of the following modes:
MMS; an MMS message template delivered by a network; Push mode; Dynamic Content Delivery (DCD); Wireless Application Protocol (WAP)/web browse; Subscriber Identity Module Tool Kit (STK); broadcast/multicast or Cell Broadcast Service (CBS) monitoring; 2-dimensional codes; Hyper Text Transfer Protocol (HTTP); Instant Messaging (IM) mode; Session Initiation Protocol (SIP) application; email mode; or, a timer is set on the server, and the information about orderable commodities is delivered to the terminal through a Synchronization Mark-up Language (SyncML) protocol when the timer times out.

23. The system of claim 21, wherein:
the first server finds the second server closest to the destination according to a recipient postcode obtained through resolution of the order result.
